# FASCICULE DE BREVET EUROPEEN

(11) **EP 3 233 310 B1**
(45) Date de publication et mention de la délivrance du brevet: **06.02.2019**
(21) Numéro de dépôt: 15808733.8
(22) Date de dépôt: 25.11.2015
(51) Int. Cl.: B06B 1/06, B06B 3/00

(54) **TRANSDUCTEUR TUBULAIRE ULTRASONORE MODULAIRE ET IMMERSIBLE**
MODULARER TAUCHFÄHIGER ROHRFÖRMIGER ULTRASCHALLWANDLER
MODULAR, SUBMERSIBLE ULTRASONIC TUBULAR TRANSDUCER

(30) Priorité: 15.12.2014 FR 1462451
(43) Date de publication de la demande: 25.10.2017
(73) Titulaire: Cedrat Technologies, 38246 Meylan Cedex (FR)
(72) Inventeur: FORISSIER, Timothée, 38330 Saint-Nazaire-les-Eymes (FR); BENCHEIKH, Nabil, 38950 Saint-Martin-le-Vinoux (FR); CLAEYSSEN, Frank, 38240 Meylan (FR); PAGÈS, Alexandre, 38330 Saint-Nazaire-les-Eymes (FR)
(74) Mandataire: Talbot, Alexandre
(86) Numéro de dépôt international: PCT/FR2015/053208
(87) Numéro de publication internationale: WO 2016/097513

(56) Documents cités:
- EP-A1- 0 462 037
- EP-A2- 1 004 364
- US-A- 5 200 666
- SHUYU LIN ET AL: "A new type of high power composite ultrasonic transducer", JOURNAL OF SOUND AND VIBRATION, vol. 330, no. 7, 1 mars 2011 (2011-03-01), pages 1419-1431, XP055210660, ISSN: 0022-460X, DOI: 10.1016/j.jsv.2010.10.009

## Description

### Domaine technique de l'invention

L'invention concerne un transducteur ultrasonore tubulaire pour propager des ondes acoustiques dans un milieu fluide, et comprenant :
- un dispositif de conversion électromécanique à éléments actifs associé à au moins un tube métallique transmettant les vibrations au milieu fluide,
- un système de transmission des vibrations entre le dispositif de conversion et le tube,
- et un dispositif de précontrainte des éléments actifs dudit dispositif de conversion.

Les transducteurs ultrasonores tubulaires permettent de créer des vibrations radiales et propager des ondes dans des milieux, notamment fluides, pouvant donner lieu à de la cavitation, et trouvant des applications de nettoyage de précision ou de sonochimie, telles que l'extraction de substances ou du dépôt de particules. Ils visent en particulier à générer les ultrasons :
- au sein même du fluide et à proximité de la surface à traiter pour maximiser le rendement de l'installation,
- sur toute la surface à traiter, dont la longueur peut atteindre plusieurs mètres,
- avec une amplitude aussi uniforme que possible pour que le traitement de la surface soit homogène,
- selon une direction perpendiculaire à la surface à traiter pour limiter les pertes et maximiser le rendement.

### État de la technique

Les ultrasons de forte puissance en milieu fluide sont à la base de la sonochimie. Des ondes acoustiques ultrasonores de forte puissance produisent des fortes pressions dynamiques. Quand celles-ci dépassent la pression statique, elles provoquent de la cavitation. La cavitation, qui se manifeste par des microbulles, génère une quantité importante d'énergie locale sous forme de pression et de chaleur. L'énergie ainsi apportée au milieu peut, selon les applications, déclencher ou accélérer une réaction chimique, dissocier des matériaux intimement liés ou mélanger des solutions fluides, l'ensemble de ces effets étant classés dans le domaine de la sonochimie. Par exemple, il est possible de dégraisser la surface de pièces de manière accélérée en générant de la cavitation dans un fluide comportant des solvants. Il est aussi possible de réaliser le dépôt de composés particuliers, dissous dans le milieu fluide sur une surface à traiter telle qu'un textile pour lui conférer des propriétés antibactériennes. D'autres exemples d'applications concernent le dé-colmatage de filtre, le dégazage, le mélange, l'émulsification, l'extraction et la fragmentation.

Un moyen préférentiel de générer des ultrasons dans un fluide consiste en un transducteur formé d'un convertisseur électromécanique et d'une sonotrode en forme de tube placé en contact avec le fluide. Le convertisseur électromécanique met en vibration la sonotrode. Les vibrations perpendiculaires à la surface de la sonotrode, émettent des ondes acoustiques dans le fluide.

Le convertisseur électromécanique est classiquement de type Langevin, c'est à dire formé d'un empilement de matériaux actifs, de type céramique piézoélectrique annulaire par exemple, précontraint entre deux contre masses de matériau élastique, de type métallique par exemple. On retrouve ce concept dans les documents FR1260903 et EP0342446 avec des convertisseurs électromécaniques décrits précédemment avec respectivement un système de précontrainte extérieur (permettant l'utilisation de pastilles pleines de matériau actif) et par le centre de l'empilement de matériau actif (réduisant l'encombrement et améliorant l'uniformité de la précontrainte). L'empilement de matériau actif est ensuite alimenté à sa fréquence de résonance, ce qui produit des vibrations longitudinales dans l'axe du convertisseur, en une demi-longueur d'onde. La précontrainte permet de maintenir le matériau actif en compression et d'assurer les contacts entre tous les éléments de l'empilement lorsque les amplitudes de vibration sont importantes, évitant ainsi les chocs et la casse des éléments actifs, même dans le cas d'un facteur de qualité élevé.

La sonotrode en contact d'un côté avec le convertisseur et de l'autre avec le milieu fluide, est une pièce métallique, typiquement en acier ou en titane, qui prend généralement une forme cylindrique et qui peut être pleine ou creuse.
Par exemple, le document US4537511 présente un transducteur non-immergeable basé sur un convertisseur électromécanique solidaire d'un tube plongé dans le fluide. L'ensemble du transducteur formé par le convertisseur et le tube est excité suivant un mode longitudinal à plusieurs demi-longueurs d'onde : La longueur du transducteur est un multiple entier de demi-longueur d'onde de vibration. De par ce mode, la vibration produite la plus importante est une vibration longitudinale de l'extrémité. Elle produit des ondes de pression très élevées, ce qui produit le maximum de cavitation du transducteur dans son axe.
Néanmoins, il n'est pas possible de mettre en série deux transducteurs, car la cavitation axiale produite perturbera voire détériorera le transducteur à proximité. Par ailleurs, des vibrations radiales sont bien produites mais leur amplitude est inférieure à la vibration axiale. Le transducteur connu n'est donc pas optimisé pour produire des vibrations radiales, ce qui réduit l'efficacité de procédés basés sur l'utilisation d'énergie acoustique localisée autour du tube. De plus, du fait que l'excitation du tube est réalisée d'un côté du tube, la vibration radiale le long du tube n'est pas symétrique par rapport à un plan perpendiculaire à l'axe et passant par le centre du tube. La vibration décroit le long du tube en s'éloignant du convertisseur électromécanique.

Le document EP1065009 présente de nombreuses considérations géométriques sur le tube afin que celui-ci s'accorde au mieux avec le convertisseur électromécanique pour maximiser le rendement du transducteur. Ce document présente aussi une vue très schématique d'une configuration à plusieurs tubes et plusieurs convertisseurs successifs et à deux convertisseurs pour un tube, chacun à une extrémité du tube dans le but d'augmenter la longueur de traitement possible par ces transducteurs. Ces configurations sont basées sur la vibration axiale des convertisseurs. Il présente l'inconvénient de ne pas proposer de moyen d'obtenir une vibration radiale homogène.

Le concept de transducteurs à deux convertisseurs pour une sonotrode en forme de tube est présenté ultérieurement et en détail dans le document US5200666 sous le nom de transducteur push-pull. Le transducteur utilise un mode longitudinal. Le tube au centre du transducteur produit des vibrations radiales, mais pas les deux extrémités. Le champ acoustique le long du transducteur ne peut être homogène pour les raisons données ci-dessous. Le document "A new type of high power composite ultrasonic transducer" publié par Shuyu Lin et al. dans la revue Journal of sound and vibration le 01 mars 2011 décrit aussi un tel transducteur tubulaire.

Dans toutes les configurations de transducteurs tubulaires précédentes, le tube est excité par une vibration longitudinale ; la longueur d'onde de la vibration mécanique dans le tube est un sous multiple entier de la dimension longitudinale du tube. Celui-ci doit donc être accordé par rapport à la fréquence de fonctionnement voulue. La demi-longueur d'onde (distance entre deux noeuds) λ/2 dans les matériaux est égale à la moitié du rapport de la célérité c du milieu par la fréquence f. λ/2 = ½ c/f. Pour une fréquence f=20kHz, dans l'acier où c=5600m/s, la demi-longueur d'onde (distance entre 2 noeuds) λ/2=14cm. Dans le titane où c=4900m/s, λ/2=12cm.
La vibration ainsi générée présente un inconvénient puisque la distance entre les noeuds de vibration, est de l'ordre de 12 à 14cm pour un tube. Or face aux noeuds qui ne produisent pas de vibrations, les champs acoustiques dans le fluide sont réduits ce qui est responsable d'une absence de cavitation dans une zone importante. Cette grande demi-longueur d'onde entraîne donc une faible homogénéité de la zone de cavitation préjudiciable lors du traitement de la surface visée. Dans une application telle que du dépôt sur textile, cela entraîne une irrégularité du dépôt et donc une mauvaise qualité de traitement.

De plus à cause de l'origine longitudinale de la vibration et de l'amortissement ramené par le fluide, l'amplitude de vibration radiale de chaque ventre sur le tube diminue avec l'éloignement du générateur. En pratique, la vibration du 5^{e} ventre, est divisée par 2 à 3 par rapport à la vibration du 1^{ier} ventre. Une sonotrode en acier exploitant cinq demi-longueurs d'onde de 14cm atteint une longueur de 70cm. Un nombre de demi-longueur d'onde longitudinale égale à 5 étant un maximum pratique, cette longueur de 70cm est un maximum pratique.

Dans les configurations à deux convertisseurs, la structure est symétrique. Compte tenu des limitations précédentes induites par le mode longitudinale, il est possible de doubler cette limite en longueur sans toutefois dépasser 1,5m, sauf à accepter des sonotrodes aux amplitudes de vibrations très inhomogènes.
De plus leurs inconvénients restent que seule la sonotrode est immergeable et que le transducteur ne peut être utilisé pour produire un traitement sonochimique pour des grandes pièces, de longueur supérieure à 1,5m à 25kHz. Il n'est pas possible de mettre en série plusieurs transducteurs car les convertisseurs ne sont pas immergeables et leurs vibrations longitudinales dans l'axe du transducteur produiraient des effets néfastes sur le transducteur proche voisin.

A cause de cette limitation en dimension et en homogénéité, il n'est pas possible de traiter facilement des grandes pièces. Or il existe de nombreux besoins de nettoyage ultrasonore de grandes pièces ou de traitement sonochimiques.

Le document EP0542016 présente une méthode de superposition de signaux de plusieurs fréquences afin d'améliorer l'homogénéité de l'onde de vibration émise. Bien que théoriquement efficace, cette solution nécessite l'utilisation d'électronique coûteuse et complexe. Elle ne résout pas le problème de traitement de grandes dimensions.

Le document US6342747 présente un concept de transducteur tubulaire symétrique composé de deux moitiés de tubes de part et d'autre d'un convertisseur électromécanique. Ce transducteur est basé sur un seul convertisseur central transmettant des vibrations axiales à deux résonateurs tubulaires. Le transducteur fonctionne en mode de vibration longitudinale des tubes. Dans ce concept, rien ne produit des vibrations radiales dans la zone centrale du transducteur. L'absence de vibration radiale dans cette zone conduira à une forte réduction des champs acoustiques et une absence de cavitation. Le champ acoustique le long du transducteur sera donc sensiblement inhomogène. Par ailleurs dans ce concept l'immersion du convertisseur est rendue possible par un système de capotage théorique dont la liaison avec un éventuel bâti n'est pas détaillée. De plus, ce concept ne permet pas d'envisager une quelconque modularité afin d'adresser la problématique de longueur du transducteur et de traitement de grandes pièces.

Les documents US4016436 et US5994818 présentent un concept qui repose sur un convertisseur électromécanique classique qui met en mouvement une sonotrode tubulaire plongée dans le fluide. La sonotrode est excitée en mode radial par une excitation vibratoire radiale produite par le convertisseur. Certaines des configurations décrites font appel à l'excitation du tube par deux convertisseurs placés aux extrémités. Dans les deux documents, le transducteur n'est pas immergeable et ne permet pas son utilisation en série afin de pouvoir traiter des grandes pièces.

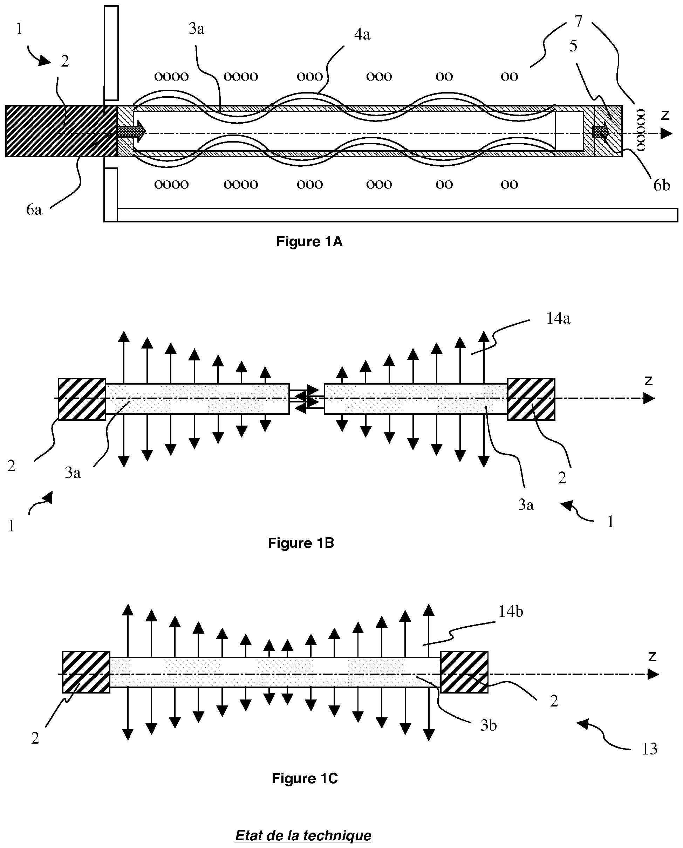

La figure 1A présente une vue schématique en coupe d'un transducteur (1) selon l'art antérieur, décrit dans le document US4537511. Ce transducteur connu est composé d'un convertisseur électromécanique (2), d'un tube (3a) de transmission de la vibration au milieu extérieur, et d'une masse inertielle (5) située à l'opposé du convertisseur. La vibration (6a) générée par le convertisseur électromécanique (2) comprime le tube (3a) contre la masse inertielle (5), excitant le mode de vibration longitudinal du tube (4a), qui s'accompagne d'une vibration radiale du tube. Cette vibration radiale génère de la cavitation (7) dans des zones du milieu situées en face des ventres de vibration. La cavitation (7) est représentée schématiquement par des bulles. La vibration radiale et la cavitation induite diminuent en fonction de l'éloignement par rapport au convertisseur électromécanique (2).

La vibration radiale est liée à la longueur d'onde du mode longitudinal du tube, et donc à la longueur du tube qui nécessite alors d'être parfaitement adaptée à la fréquence du signal d'excitation qui commande le convertisseur électromécanique (2). Dans ce mode longitudinal, la masse inertielle (5) vibre en translation (6b) suivant l'axe z, et émet des ondes acoustiques ultrasonores axiales de forte intensité, ce qui produit aussi de la cavitation (7) dans l'axe z du transducteur. Cet effet n'est pas souhaitable lorsqu'il faut concentrer l'énergie acoustique radialement autour du transducteur, d'autant plus qu'il consomme inutilement de la puissance électrique.

Les figures 1B et 1C présentent dans deux configurations de transducteur ultrasonore, les vecteurs représentant l'amplitude des vibrations mécaniques (14a, 14b) transmettant de l'énergie acoustique au milieu. Les configurations sont les suivantes :
- Le transducteur utilisé est du type décrit dans le document US4537511, c'est à dire composé d'un convertisseur électromécanique (2) et d'un tube (3a). de transmission de la vibration au milieu. Dans la configuration de la figure 1B, deux transducteurs (1) sont mis en regard pour augmenter la longueur de génération de vibrations. L'amplitude de vibration (14a) est décroissante le long de chaque transducteur (1), et le ratio d'atténuation est d'environ trois, entre le convertisseur électromécanique et l'extrémité du tube. De plus, ce schéma ne prend pas en compte les ondes vibratoires parasites importantes transmises par les extrémités de chaque transducteur à l'autre transducteur en regard. Le comportement réel est donc dégradé par rapport à ce schéma.
- Le transducteur (13) selon l'art antérieur décrit dans le document US5200666, est composé (figure 1C) de deux convertisseurs électromécaniques (2) et d'un tube (3b) de transmission de la vibration au milieu commun aux deux convertisseurs. L'amplitude de vibration (14b) diminue aussi en s'éloignant des convertisseurs électromécaniques (2). Cette configuration permet d'obtenir une amplitude de vibration symétrique par rapport à un plan perpendiculaire à l'axe z passant par le centre du transducteur, mais non uniforme. La longueur totale est limitée à une longueur de l'ordre de celle de deux transducteurs simples.

L'état de la technique précité fait apparaître pour les transducteurs tubulaires existants, les limitations suivantes :
- Structure non totalement immergeable, ne permettant pas d'agir sur des grandes structures, et de manière homogène,
- Longueur limitée à 0,7m en général et à 1,5m environ dans le cas du transducteur push-pull (document US5200666), ce qui ne permet pas de traiter des grandes pièces, économiquement pertinentes dans l'industrie du textile par exemple (2 à 4m de large).

- Champ acoustique non homogène le long du transducteur, conditionné par la fréquence de résonance et les dimensions du tube, avec notamment des noeuds et ventres de vibration très espacés ainsi qu'une décroissance importante entre le convertisseur et l'extrémité libre, ce qui ne permet pas d'assurer une homogénéité de traitement nécessaire à des applications de traitement de surface par exemple.
- L'impossibilité d'immerger complètement le convertisseur électromécanique ce qui réduit considérablement le rendement de l'installation et donc qui augmente le coût de fonctionnement.

### Objet de l'invention

L'invention a pour but de remédier à ces inconvénients et, plus particulièrement, aux problématiques de génération de vibration radiale destinée à la production d'un champ acoustique relativement uniforme autour de la sonotrode et symétrique par rapport à un plan passant par le centre et perpendiculaire à l'axe, et sur des grandes longueurs.

Le transducteur selon l'invention est caractérisé en ce que le dispositif de conversion est composé de deux convertisseurs électromécaniques disposés axialement à l'intérieur du tube, de part et d'autre d'un coupleur, lequel se trouve dans la partie centrale du tube et en contact avec ce dernier, et que chaque extrémité du tube est équipée d'un couvercle, l'ensemble formant un module symétrique immergeable.

Il en résulte un maximum de vibration radiale du tube. Le transducteur est mis en vibration par la position centrale de la pièce de transmission de vibration située dans le plan de symétrie par rapport à l'axe de symétrie de révolution du transducteur. Le dispositif de conversion électromécanique est donc protégé par le tube étanche, assurant la possibilité d'immerger le transducteur. La position centrale de la pièce de transmission de vibration permet d'uniformiser l'amplitude de la vibration radiale générée par le transducteur, en effet, la décroissance d'amplitude se fait de part et d'autre du centre de chaque module.

Le transducteur selon l'invention permet un assemblage modulaire. Chaque module est indépendant et peut être relié à son proche voisin par les couvercles, permettant ainsi d'assembler un nombre de modules non limité, menant à une longueur sans limite, sans affecter les performances de chaque module.

Selon une caractéristique de l'invention, chaque module indépendant autorise une alimentation optimale à la bonne fréquence pour un rendement maximal. Les couvercles peuvent être équipés de dispositif d'isolation vibratoire permettant aux modules de ne pas perturber et de ne pas être perturbés par les autres modules.

Selon un mode de réalisation préférentiel, le système de précontrainte du dispositif de conversion électromécanique est creux afin de permettre le cheminement des câbles d'alimentation des modules plus éloignés du bâti de référence. Les câbles sont sécurisés à l'entrée et à la sortie du perçage sous faible tension mécanique pour éviter leur échauffement par frottement ou une mise sous forte tension mécanique lors du fonctionnement du transducteur.

La vibration transmise au tube radialement, engendre une vibration radiale du tube dont la longueur d'onde est très inférieure à celle des modes de vibrations longitudinales des transducteurs tubulaires classiques. Les noeuds et ventres de vibration sont donc espacés seulement de quelques centimètres (5 à 10 fois moins que pour des transducteurs tubulaires classiques), ce qui permet une génération d'ondes de pression plus rapprochées permettant d'améliorer l'homogénéité de certains procédés basés sur l'utilisation des transducteurs à ultrasons.

Selon une caractéristique de l'invention, les deux convertisseurs électromécaniques qui composent le dispositif de conversion électromécanique peuvent être alimentés avec des signaux de fréquence et amplitude identiques, mais avec un déphasage entre les deux. Le déphasage entre les deux signaux traduit ainsi une superposition de deux signaux excitant le dispositif selon deux modes différents : A la vibration radiale du tube est ajoutée une vibration axiale, la combinaison des deux vibrations permettant de réduire le nombre de noeuds de vibration ce qui améliore l'homogénéité du champ acoustique produit et donc du traitement dans le fluide.

Selon un autre mode de réalisation, les modules d'un même ensemble sont alimentés par une seule électronique afin de limiter le nombre de câbles cheminant à l'intérieur du transducteur.

Selon une autre caractéristique de l'invention, les modules extrêmaux sont découplés des interfaces mécaniques externes via des couvercles équipés de dispositifs d'isolation vibratoire, permettant ainsi une liaison avec un bâti mécanique quelconque d'un côté ou des deux côtés du transducteur. Il en résulte aussi une réduction des vibrations aux extrémités dans l'axe du transducteur.

Plusieurs ensembles de transducteurs peuvent être logés dans une même cuve d'une machine traitement.

La surface à traiter par ultrasons peut être du textile. Dans ce cas, le textile est guidé autour de plusieurs transducteurs pour augmenter l'exposition aux ultrasons. Une bande de textile peut ainsi être facilement traitée par ce type de transducteur dans une cuve de traitement spécifique.

En résumé, plusieurs caractéristiques de l'invention peuvent être utilisées isolément ou en combinaison :
- le dispositif de précontrainte des éléments actifs de chaque module comporte un passage axial traversant pour permettre le cheminement des câbles d'alimentation des modules accolés et du convertisseur opposé ;
- les deux convertisseurs électromécaniques sont alimentés par des tensions alternatives, soit en phase, soit en opposition de phase pour obtenir respectivement un premier mode de vibration radial du tube ou un deuxième mode de vibration axiale du tube ;
- chaque convertisseur électromécanique comporte un empilement d'éléments actifs et d'une contre-masse disposée à l'opposé du coupleur (10) commun central ;
- le dispositif de précontrainte est constitué d'une tige creuse traversant les deux convertisseurs et le coupleur, et d'une paire d'anneaux de maintien pour la mise en compression des empilements d'éléments actifs et de leurs contre-masses ;
- le tube de transmission de chaque module est composé de deux tubes symétriques accolés avec interposition du coupleur ;
- le couvercle de chaque module comporte une pièce de découplage pour isoler de façon vibratoire le module de ses interfaces mécaniques, notamment une liaison à un bâti, une liaison à un autre module juxtaposé et une liaison vers un capot de fermeture ;
- les différents modules sont alimentés par un circuit électronique commun configuré pour réduire le nombre de câbles cheminant au travers des modules, en utilisant une fréquence de résonance moyenne pour la fréquence d'excitation du système.

### Description sommaire des dessins

D'autres avantages et caractéristiques ressortiront plus clairement de la description qui va suivre d'un mode particulier de réalisation de l'invention, donné à titre d'exemple non limitatif et représenté aux dessins annexés, dans lesquels :
- la Figure 1A présente une vue schématique d'un transducteur tubulaire selon l'art antérieur, décrit dans le document US4537511 ;
- les figures 1B et 1C montrent l'amplitude de vitesse vibratoire le long de deux transducteurs tubulaire selon l'art antérieur ;
- les figures 2A et 2B représentent la déformée vibratoire d'un transducteur modulaire selon l'invention, avec ses deux modes de fonctionnement, et les champs de cavitation respectifs générés ;
- la figure 2C illustre l'amplitude de vitesse vibratoire le long du transducteur modulaire de la figure 2A ;
- la figure 3 présente le principe de modularité et de découplage des modules du transducteur selon l'invention, avec plusieurs exemples de configurations ;
- la figure 4 représente une vue en coupe d'une réalisation du transducteur ultrasonique de la figure 2A, dans lequel la conversion électromécanique est effectuée par deux convertisseurs constitués de deux empilements d'éléments actifs symétriques et d'un système de précontrainte percé. La vibration mécanique générée étant ensuite transmise à deux tubes de transmission de vibrations vers le milieu ;
- la figure 5 montre le cheminement et la sécurisation des câbles à l'intérieur d'un module de transducteur selon la figure 4 ;
- la figure 6 représente plusieurs configurations d'alimentation électroniques pour des transducteurs modulaires ultrasonores selon l'invention, pour lesquels les modules peuvent être alimentés en série, en parallèle ou indépendamment ;
- la figure 7 est une vue schématique en coupe d'une configuration de cuve incluant une pièce exposée aux ultrasons générés par le transducteur selon l'invention ;
- les figures 8A et 8B représentent deux implantations de plusieurs transducteurs modulaires selon l'invention dans un milieu, de façon à maximiser l'amplitude acoustique transmise au milieu à la surface d'une bande de textile à traiter ;
- la figure 9 représente une configuration de cuve cylindrique coaxiale avec le transducteur selon l'invention.

### Description de modes particuliers de réalisation.

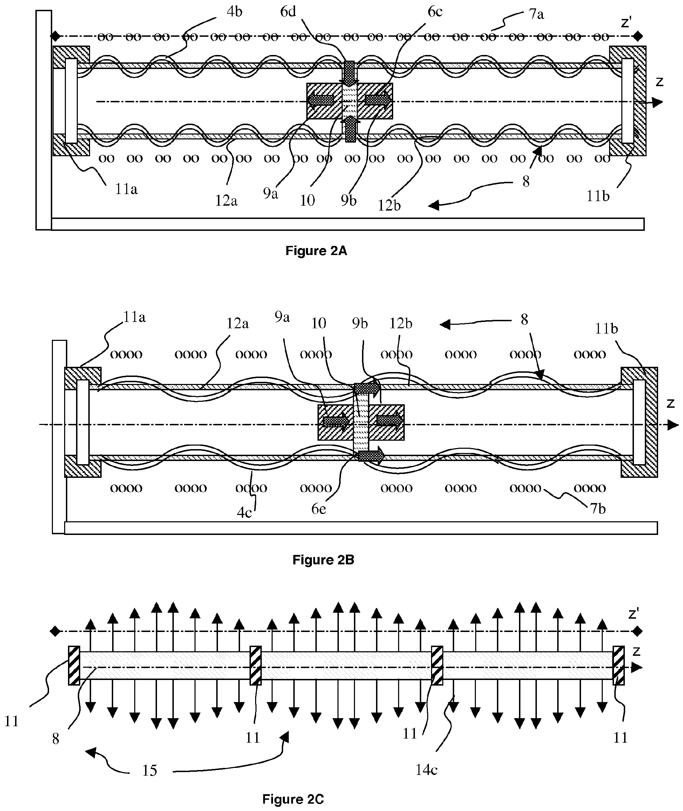

Les figures 2A et 2B représentent un transducteur symétrique (8) selon l'invention en illustrant deux modes de fonctionnement différents.
Dans un premier mode de fonctionnement (figure 2A), dit radial, le transducteur symétrique (8) est composé de deux convertisseurs électromécaniques symétriques (9a, 9b), d'un coupleur (10) et d'une structure tubulaire (12a, 12b) destinée à la génération acoustique radiale. Les deux convertisseurs sont placés le long d'un axe z, symétriquement de part et d'autre du coupleur (10), lequel se trouve dans le plan central de la structure tubulaire (12a, 12b), formée par deux tubes (12a, 12b) accolés et aligné sur l'axe z.
Les deux convertisseurs (9a, 9b) sont excités en phase, ce qui produit des vibrations axiales (6c) de dilatation en compression sur le coupleur (10). Ce dispositif va alors convertir la vibration axiale (6c) en vibration radiale (6d). Cette vibration radiale (6d) permet d'exciter le mode de vibration radial (4b) de la structure tubulaire (12a, 12b), destinée à la génération acoustique radiale.
La vibration se développe ainsi selon la longueur d'onde radiale du tube, c'est-à-dire une longueur d'onde beaucoup plus faible que la longueur d'onde du mode longitudinale. Typiquement il est possible de concevoir la structure tubulaire (12a, 12b) de telle sorte que la demi-longueur d'onde du mode de flexion radiale soit de l'ordre de 1 à 3cm. Cette demi-longueur d'onde est petite devant la longueur d'un tube, typiquement de 30 à 60cm. Cela permet de placer plus de 10 demi-longueurs d'onde sur le tube. Corrélativement, cela signifie qu'il existe de nombreux modes de vibration radiale. Du coup, il n'est pas nécessaire d'adapter la longueur des tubes à la fréquence d'excitation des convertisseurs électromécaniques (9a, 9b), contrairement à un transducteur tubulaire selon l'état de l'art antérieur : Il existera toujours un mode radial assez proche en fréquence pour être excité à la fréquence de résonance du mode de vibration des convertisseurs.
Les couvercles (11a, 11b) ménagés aux extrémités opposées des tubes (12a, 12b), concentrent les vibrations à la surface cylindrique du transducteur et évite la génération d'ondes ultrasonores axiales. Toute l'énergie vibratoire étant produite sur la surface cylindrique, le rendement global du transducteur est augmenté pour les procédés nécessitant de la puissance acoustique dans une zone contenant le segment z' parallèle à l'axe z du transducteur placé face à la surface cylindrique du transducteur.

Dans un second mode de fonctionnement (figure 2B), dit axial, le transducteur (8) symétrique selon l'invention fait intervenir les deux convertisseurs électromécaniques symétriques (9a, 9b) qui sont excités en opposition de phase. Il en résulte une vibration de translation (6e), entraînant ainsi un déplacement selon l'axe z du coupleur (10). Ce dispositif va alors transmettre cette vibration aux tubes de transmission (12a, 12b) vers le milieu dans lequel il est plongé. La vibration se développe ainsi selon un mode longitudinale du tube (4c), c'est-à-dire selon un mode similaire à celui du transducteur selon l'art antérieur. L'intérêt de ce mode seul n'est pas déterminant, en revanche en combinaison avec le mode précédent, ce double mode de fonctionnement réduit le nombre de noeuds, voire génère une onde progressive le long du transducteur, entraînant ainsi une homogénéisation forte du traitement appliqué.

La figure 2C illustre un ensemble de transducteurs modulaires (15) selon l'invention, composé de plusieurs transducteurs (8) de la figure 2A ou 2B, et de plusieurs couvercles (11). L'amplitude de vibration (14c) est symétrique au niveau de chaque module et le ratio d'atténuation maximal est faible. Ainsi le profil d'amplitude de vibration généré est plus régulier que celui des deux autres configurations, et la longueur n'est pas limitée. L'énergie acoustique, responsable de la cavitation, est ainsi relativement homogène suivant un segment z' parallèle à l'axe z. Il y a peu d'énergie acoustique produite dans l'axe z, aux extrémités de l'ensemble de transducteurs modulaires (15).

La double propriété symétrique et modulaire du transducteur selon l'invention, permet d'obtenir une amplitude de vibration générée plus régulière et sur des largeurs de traitement plus importantes, ce qui permet de satisfaire les exigences de régularités et de dimensions de certaines applications, impliquant le traitement par ultrasons de grandes pièces, comme les dépôts sur textile assistés par ultrasons.

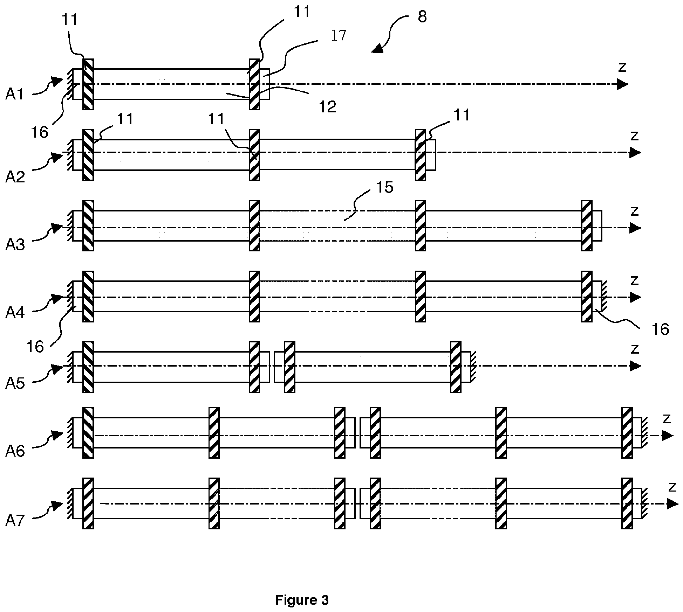

La Figure 3 présente les configurations A1 à A7 rendues possibles par la conception modulaire du transducteur ultrasonore selon l'invention. Ces configurations permettent d'adresser des problématiques de traitement de surface sur des largeurs très différentes et sans limitation théorique. Le transducteur modulaire (8) est représenté de façon simplifié par son dispositif de transmission de vibration au milieu (12) et son couvercle (11). Les extrémités des ensembles de transducteurs sont composées par des interfaces avec un bâti (16), un capotage simple (17) rendant l'intérieur du transducteur étanche, ou un autre module de transducteur selon l'invention.

Les configurations présentées sont les suivantes :
- A1, module seul : Le module de transducteur du type des figures 2A et 2B, est fixé à un bâti (16) par une extrémité, et en contact avec le milieu par l'autre extrémité. Le module est isolé de façon vibratoire des deux extrémités par des dispositifs d'isolation vibratoire intégrés aux couvercles (11). Cette configuration permet d'obtenir une longueur utile de génération de vibration similaire à celle d'un transducteur selon l'art antérieur.
- A2, deux modules : Cette configuration est similaire à la configuration A1 avec l'ajout d'un module de transducteur en série avec le précédent. Dans cette configuration le dispositif de découplage est commun aux deux modules. Cette configuration illustre le principe de modularité et permet de doubler la longueur utile de génération de vibration.
- A3, n modules : Cette configuration est similaire aux configurations A1 et A2 avec un nombre entier [n-2] de modules (15) entre les modules extrémaux. Le principe d'interfaçage entre les modules reste identique à la configuration A2. Cette configuration permet de couvrir une longueur utile de génération de vibration théoriquement infinie.
- A4, n modules, double encastrement : Cette configuration est similaire à la configuration A3 avec les deux extrémités liées à un bâti (16). Cette configuration permet de réduire la problématique de flexion statique du transducteur complet, ce qui permet d'atteindre des longueurs supérieures.
- A5, deux transducteurs à un module mis en regard : Cette configuration présente deux transducteurs tels que définis dans la configuration A1, mis en regard afin d'augmenter la largeur de génération de vibration. Par ailleurs, le découplage du capotage permet de réduire les perturbations générées par les transducteurs dans la direction longitudinale, réduisant ainsi les baisses de performances rencontrés avec les transducteurs tubulaires selon l'état de l'art antérieur.
- A6, deux transducteurs à deux modules mis en regard : Cette configuration présente deux transducteurs tels que définis dans la configuration A2, mis en regard de la même façon et pour les mêmes raisons que dans la configuration A5.
- A7, deux transducteurs à n modules mis en regard : Cette configuration présente deux transducteurs tels que définis dans la configuration A3, mis en regard de la même façon et pour les mêmes raisons que dans la configuration A5.
- L'ensemble non exhaustif des configurations permises par la modularité et l'isolation vibratoire du transducteur modulaire, permet d'adresser une grande variété de problématiques, avec une grande flexibilité en regard de la longueur de génération de vibration.

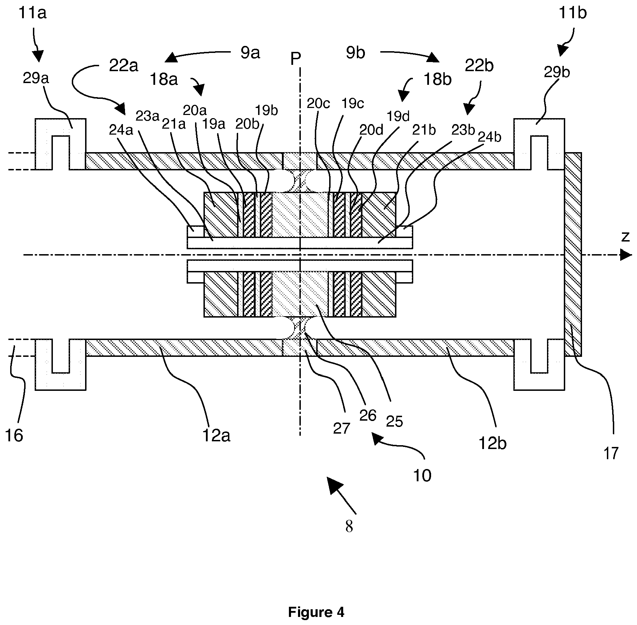

La figure 4 présente un mode de réalisation d'un transducteur ultrasonore modulaire selon la figure 2A et 2B. Le transducteur (8) est composé de deux convertisseurs électromécaniques (9a, 9b), d'un coupleur (10) central, d'un dispositif symétrique de transmission de vibration (12a, 12b) au milieu, et d'un dispositif symétrique d'isolation vibratoire dans les couvercles (11a, 11b). Le transducteur est symétrique par rapport au plan P, orthogonal à l'axe de symétrie de révolution z.

Les convertisseurs électromécaniques (9a, 9b) sont composés chacun d'un empilement d'éléments actifs (18a, 18b), d'une contre masse (21a, 21b) et d'un dispositif de précontrainte (22a, 22b). Les empilements d'éléments actifs sont typiquement composés de couches successives de céramiques piézoélectriques annulaires (19a, 19b, 19c, 19d) convertissant un signal électrique en vibration mécanique, et d'électrodes (20a, 20b, 20c, 20d) permettant d'alimenter les matériaux actifs (18a, 18b).

Le dispositif de précontrainte est composé d'une tige de précontrainte creuse (23a, 23b) qui supporte la précontrainte et permettra la traversée des fils électriques. Des anneaux (24a, 24b) de maintien de la précontrainte, assurent la mise en compression des empilements d'éléments actifs (18a, 18b).

Les empilements actifs (18a, 18b) sont alimentés par une tension électrique alternative, choisie pour mettre en résonance mécanique les convertisseurs électromécaniques (9a, 9b) avec la pièce centrale (25). Deux modes de vibration sont exploitables. Soit les excitations sont telles que les déformations des empilements (18a, 18b) sont en phase mécanique pour provoquer des vibrations en dilatation-compression axiale de la pièce centrale (25). Soit les excitations sont telles que les déformations des empilements (18a, 18b) sont en opposition de phase mécanique pour provoquer des vibrations en déplacement axial de la pièce centrale (25).

En référence à la figure 4, le coupleur (10) fait intervenir la pièce centrale de conversion (25), un épaulement de liaison (26) et une pièce de transmission (27). L'épaulement de liaison (26) se présente comme un anneau plein ou comme un anneau ajouré, avec des trous suivant l'axe z, régulièrement répartis. Le dispositif symétrique de transmission de vibration (12) au milieu est composé de deux tubes identiques (12a, 12b) disposés de façon symétrique autour du coupleur.

La pièce centrale de conversion (25) convertit la vibration axiale générée par les convertisseurs électromécaniques (18a, 18b) en vibration radiale. Cette vibration radiale est transmise aux tubes (12a, 12b) via l'épaulement de liaison (26) et la pièce de transmission (27).

Selon un mode de réalisation alternatif, le dispositif symétrique de transmission de vibration (12) peut être composé d'un seul tube contenant le coupleur (10) qui agit par l'intérieur du tube dans le plan de symétrie perpendiculaire à l'axe z.

Sur la figure 4, les couvercles forment un dispositif symétrique d'isolation vibratoire du transducteur, composé de deux pièces de découplage identiques (29a, 29b) disposées de façon symétrique par rapport au plan P. Ces pièces de découplage permettent d'isoler de façon vibratoire le transducteur de ses interfaces mécaniques (30), notamment la liaison à un bâti (16), la liaison à un autre module de transducteur ou la liaison à un capotage simple (17) à l'extrémité de l'ensemble de transducteur modulaire. Cette isolation vibratoire permet de ne pas dissiper une quantité importante d'énergie pour mettre en mouvement inutilement le bâti, de ne pas perturber les performances des transducteurs voisins du transducteur considéré, et de ne pas générer de vibration axiale importante à l'extrémité du transducteur. Ce dispositif d'isolation vibratoire est constitué de deux pièces cylindriques formant un renflement du tube afin d'éviter la création de cavités et les risques d'usures prématurées du système à cause de la cavitation générée par les ondes mécaniques dans le fluide milieu.

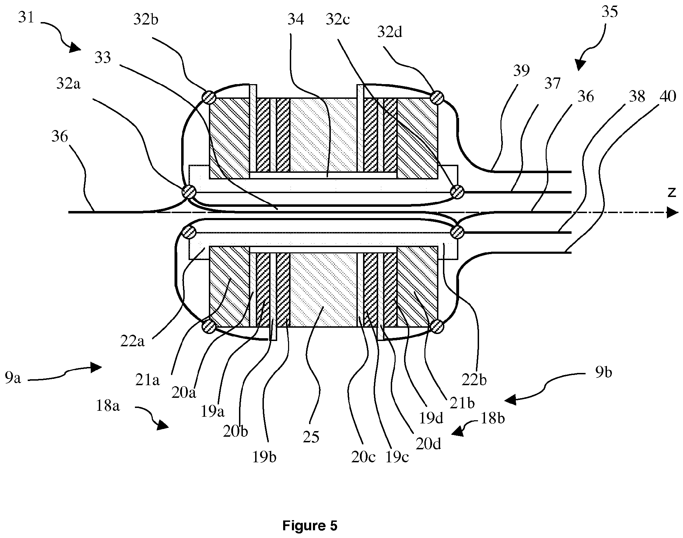

La Figure 5 présente une vue de détail de la partie centrale du transducteur ultrasonore de la figure 4. Elle illustre l'ensemble des dispositions prises pour gérer la sécurisation et le cheminement des câbles d'alimentation (31). Les deux convertisseurs électromécaniques (9a, 9b) sont séparés par la pièce de conversion de vibration (25). Chaque convertisseur électromécanique est composé du dispositif de précontrainte (22a, 22b) qui maintient solidairement, sous tension mécaniques la contre masse (21a, 21b) et l'empilement d'éléments actifs (18a, 18b), composé successivement d'électrodes (20a, 20b, 20c, 20d) et de matériaux actifs (19a, 19b, 19c, 19d), avec la pièce centrale (25).

Les câbles provenant des électrodes sont sécurisés (32a, 32b, 32c, 32d) au niveau des arêtes des contre masses et des arêtes des dispositifs de précontrainte, par exemple à l'aide d'un point de colle. Dans la zone située entre les sécurisations au niveau des arêtes des dispositifs de précontrainte (33), la tension mécanique des câbles est volontairement très faible (« boucle d'aisance ») afin de limiter la tension mécanique dans les câbles lors du fonctionnement du transducteur. Un cylindre d'isolation (34) se situe entre les électrodes et le dispositif de précontrainte qui peut être conducteur électrique afin d'éviter les courts-circuits. Ce cylindre peut être constitué d'un matériau isolant tel que le Téflon (marque déposée).
Le faisceau de câble (35) sortant d'un transducteur selon l'invention est composé du faisceau de câble provenant du transducteur disposé en amont (36), du câble du neutre du convertisseur 9a (37), du câble de la phase du convertisseur 9a (38), du câble du neutre du convertisseur 9b (39) et du câble de la phase du convertisseur 9b (40).

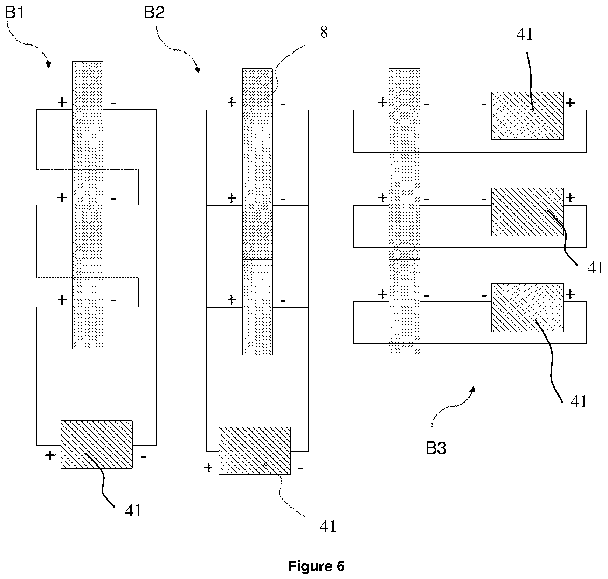

La Figure 6 présente différentes configurations possibles pour alimenter à l'aide d'une alimentation spécifique (41), un ensemble de trois modules de transducteurs (8) selon l'invention. Les configurations B1 à B3, présentées sont applicables à des nombres de transducteurs différents :
- B1, alimentation série : Dans cette configuration, les transducteurs sont branchés en série sur une seule alimentation (41). Les empilements d'éléments actifs se comportant comme des condensateurs, la tension nécessaire est fortement augmentée, en revanche le courant ne change pas.
   L'alimentation (41) est formée par un générateur de fréquence et de tension, à titre d'exemple 500V et 25kHz.
- B2, alimentation parallèle : Dans cette configuration, les transducteurs sont branchés en parallèle sur une seule alimentation (41). Le comportement capacitif des empilements d'éléments actifs entraine une augmentation du courant nécessaire sans augmentation de la tension.
- B3, alimentations indépendantes : Dans cette configuration, chaque transducteur est muni de sa propre alimentation (41). De cette façon, la fréquence d'alimentation peut être adaptée à la fréquence de résonnance de chaque transducteur et les besoins en courant et en tension ne changent pas en fonction du nombre de modules. En revanche, il faut adapter le nombre d'alimentations.

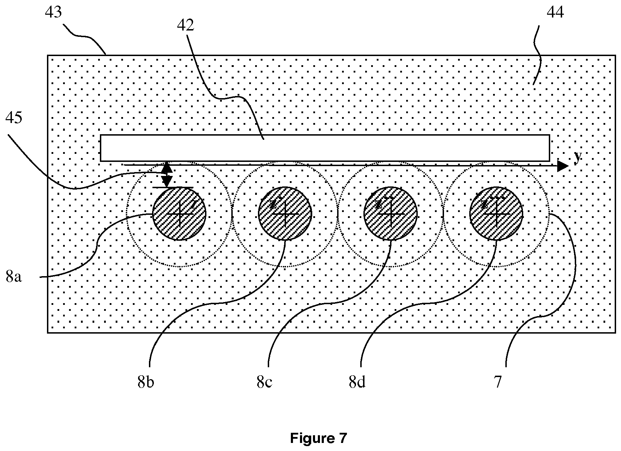

La Figure 7 présente une configuration préférentielle de mise en oeuvre d'un transducteur ultrasonore logé dans une cuve (43) rempli d'un fluide (44), et destiné à réaliser un traitement sonochimique tel qu'un nettoyage d'une pièce par ultrasons. La distance (45) entre la pièce (42) et le transducteur (8a, 8b, 8c, 8d) est choisie comme une demi-longueur d'onde dans le milieu de l'onde générée. Le but est de maximiser l'amplitude de pression dans le milieu au niveau du passage de la surface à traiter. Ainsi la cavitation (7) est maximale sur la surface à traiter afin de maximiser l'efficacité du traitement sonochimique. Cette configuration se prête aussi bien à du traitement par lot que par du traitement continu. Dans le cas d'une pièce (42) longue suivant l'axe y, la pièce peut être déplacée suivant cet axe y pour être traitée suivant sa largeur dans la direction z.

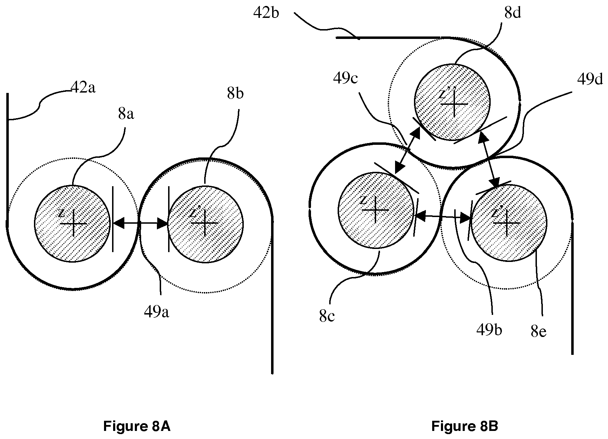

Les figures 8A et 8B présentent d'autres configurations pour des transducteurs ultrasonores (8a, 8b, 8c, 8d, 8e) ou ensemble de modules transducteurs dans un milieu quelconque, destinées à traiter par sonochimie une bande de matériau (42a, 42b). Le matériau peut être par exemple du textile ou de l'aluminium. La bande de matériau est déroulée en continu devant les transducteurs, à une vitesse adaptée au traitement sonochimique. Les surfaces à traiter par ultrasons des bandes (42a, 42b) de matériau, sont déroulées autour des transducteurs afin de maximiser l'efficacité de leur utilisation. Dans le mode de réalisation où les transducteurs sont alimentés en phase, les transducteurs (8a, 8b) sont écartés d'une distance (49a, 49b, 49c, 49d) égale à une longueur d'onde dans le milieu de l'onde générée afin de maximiser l'amplitude de pression dans le milieu au niveau du passage de la surface à traiter. Le but est de faire en sorte que l'énergie acoustique et le cas échéant, la cavitation, soient maximales sur la surface à traiter afin de maximiser l'efficacité du traitement sonochimique.
Dans un mode de réalisation particulier, plusieurs transducteurs sont présents dans une cuve (43) et la distance (49a, 49b, 49c et 49d) entre chaque ensemble de transducteurs (8a, 8b, 8c, 8d et 8e,) est égale à la longueur d'onde dans le milieu. Cette configuration permet de maximiser les pressions à une distance d'une demi-longueur d'onde. C'est à cette distance des transducteurs qu'il est souhaitable de placer la surface à traiter afin de maximiser l'efficacité du traitement sonochimique. Pour traiter une bande de textile, il sera donc avantageux de lui faire suivre un parcours la plaçant à la moitié de la distance (49a, 49b, 49c et 49d) entre chaque transducteur. La configuration à 3 transducteurs permet de doubler la surface d'exposition de la surface en n'augmentant que de 50% le nombre de transducteur.

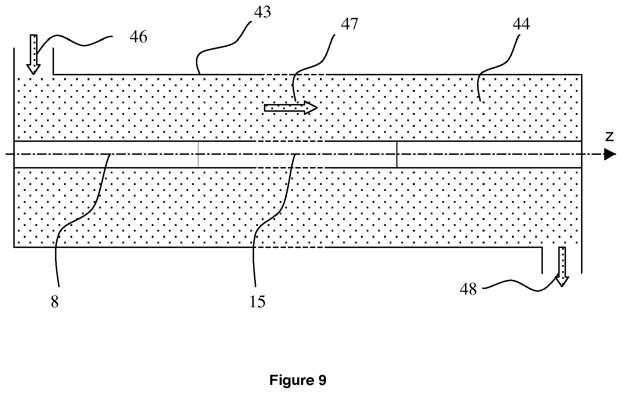

La Figure 9 présente une autre configuration préférentielle de mise en oeuvre d'un transducteur ultrasonore modulaire (8) dans une cuve (43) destinée à réaliser un traitement de fluide en flux continu (47). La cuve (43) est de forme cylindrique avec une entrée de fluide (46) et une sortie de fluide (48) à chaque extrémité. Le transducteur est placé de façon coaxiale avec la cuve (43) afin de maximiser son efficacité sur le fluide (44). Cette configuration permet un traitement aux ultrasons uniforme du fluide dont la durée d'exposition dépend du débit du fluide et du nombre n de modules (15) de transducteur utilisés.

## Revendications

1. Transducteur ultrasonore tubulaire pour propager des ondes acoustiques dans un milieu fluide, et comprenant :
- au moins un tube (3, 12a, 12b) métallique de transmission des vibrations au milieu fluide,
- un dispositif de conversion (2, 9a, 9b) électromécanique à éléments actifs associé audit au moins un tube (3, 12a, 12b) métallique de transmission des vibrations au milieu fluide,
- des câbles (37, 38, 39, 40) d'alimentation du dispositif de conversion,
- et un dispositif de précontrainte (22a, 22b) des éléments actifs dudit dispositif de conversion,
**caractérisé en ce que** le dispositif de conversion est composé de deux convertisseurs électromécaniques (9a, 9b) disposés axialement à l'intérieur du tube (12a, 12b), de part et d'autre d'un coupleur (10, 25), lequel se trouve dans la partie centrale du tube et en contact avec ce dernier, et que chaque extrémité du tube est équipé d'un couvercle (11a, 11b), l'ensemble formant un module symétrique immergeable à vibration radiale.

2. Transducteur ultrasonore selon la revendication 1, **caractérisé en ce que** le dispositif de précontrainte (22a, 22b) des éléments actifs de chaque module comporte un passage axial traversant pour permettre le cheminement des câbles (37, 38, 39, 40) d'alimentation des modules accolés et du convertisseur opposé.

3. Transducteur ultrasonore selon la revendication 1 ou 2, **caractérisé en ce que** les deux convertisseurs électromécaniques (9a, 9b) sont alimentés par des tensions alternatives, soit en phase, soit en opposition de phase pour obtenir respectivement un premier mode de vibration radial (4b) du tube ou un deuxième mode de vibration axiale (4c) du tube.

4. Transducteur ultrasonore selon l'une des revendications 1 à 3, **caractérisé en ce que** chaque convertisseur électromécanique comporte un empilement d'éléments actifs (19a, 19b, 19c, 19d) et d'une contre-masse (21a, 21b) disposée à l'opposé du coupleur (10) commun central.

5. Transducteur ultrasonore selon la revendication 4, **caractérisé en ce que** le dispositif de précontrainte (22a, 22b) est constitué d'une tige (23a, 23b) creuse traversant les deux convertisseurs et le coupleur, et d'une paire d'anneaux (24a, 24b) de maintien pour la mise en compression des empilements d'éléments actifs et de leurs contre-masses.

6. Transducteur ultrasonore selon l'une des revendications 1 à 5, **caractérisé en ce que** le tube de transmission de chaque module est composé de deux tubes (12a, 12b) symétriques accolés avec interposition du coupleur (25).

7. Transducteur ultrasonore selon la revendication 1, **caractérisé en ce que** le couvercle (11a, 11b) de chaque module comporte une pièce de découplage (29a, 29b) pour isoler de façon vibratoire le module de ses interfaces mécaniques, notamment une liaison à un bâti (16), une liaison à un autre module juxtaposé et une liaison vers un capot de fermeture (17).

8. Assemblage modulaire d'une pluralité de transducteurs selon l'une des revendications 1 à 7, **caractérisé en ce que** les différents modules (8a, 8b, 8c, 8d) sont alimentés par un circuit électronique commun configuré pour réduire le nombre de câbles cheminant au travers des modules, en utilisant une fréquence de résonance moyenne pour la fréquence d'excitation du système.

9. Machine de traitement comportant une cuve (43) dans laquelle sont logés un assemblage de transducteurs selon la revendication 8, et une surface à traiter (42) par ultrasons, **caractérisé en ce que** la surface à traiter (42) se situe à une distance de la surface du tube (12a, 12b) sensiblement égale à une demi-longueur d'onde (45) dans le milieu du transducteur.

10. Machine de traitement selon la revendication 9, **caractérisé en ce que** la surface à traiter par ultrasons est une bande de matériau (42a, 42b), guidée autour de plusieurs transducteurs (8a, 8b, 8c, 8d, 8e) pour augmenter l'exposition aux ultrasons.

11. Machine de traitement comportant une cuve (43) dans laquelle est logé un assemblage de transducteurs selon la revendications 8, **caractérisé en ce que** la cuve (43) est de forme cylindrique, le fluide étant injecté à une extrémité (46) et évacué (48) à l'autre extrémité pour permettre un traitement en flux continu, et que les transducteurs sont disposés de façon sensiblement coaxiale dans ladite cuve.

## Patentansprüche

1. Röhrenförmiger Ultraschallwandler zur Ausbreitung von Schallwellen in einem fluiden Medium, der umfasst:
- mindestens ein Metallrohr (3, 12a, 12b) zur Übertragung der Schwingungen an das fluide Medium,
- eine elektromechanische Umwandlungsvorrichtung (2, 9a, 9b) mit aktiven Elementen, die mit dem mindestens einen Metallrohr (3, 12a, 12b) zur Übertragung der Schwingungen zum fluiden Medium verbunden ist,
- Versorgungskabel (37, 38, 39, 40) für die Umwandlungsvorrichtung,
- sowie eine Vorspannvorrichtung (22a, 22b) für die aktiven Elemente der Umwandlungsvorrichtung,
**dadurch gekennzeichnet, dass** die Umwandlungsvorrichtung aus zwei elektromechanischen Wandlern (9a, 9b) besteht, die axial innerhalb des Rohrs (12a, 12b) beidseits eines Kopplers (10, 25) angeordnet sind, der sich im mittleren Bereich des Rohrs und mit diesem in Kontakt befindet, und dass jedes Ende des Rohrs mit einer Abdeckung (11a, 11b) versehen ist, wobei das Ganze ein symmetrisches Unterwassermodul mit radialer Vibration bildet.

2. Ultraschallwandler nach Anspruch 1, **dadurch gekennzeichnet, dass** die Vorspannvorrichtung (22a, 22b) der aktiven Elemente jedes Moduls eine axiale Durchführung aufweisen, die ein Durchführen der Versorgungskabel (37, 38, 39, 40) der aneinandergebauten Module und des gegenüberliegenden Wandlers ermöglichen sollen.

3. Ulraschallwandler nach Anspruch 1 oder 2, **dadurch gekennzeichnet, dass** die beiden elektromechanischen Wandler (9a, 9b) mit Wechselspannungen entweder gleich- oder gegenphasig versorgt werden, um jeweils einen ersten Modus radialer Vibration (4b) des Rohrs oder einen zweiten Modus axialer Vibration (4c) des Rohrs zu bewirken.

4. Ultraschallwandler nach einem der Ansprüche 1 bis 3, **dadurch gekennzeichnet, dass** jeder elektromechanische Wandler einen Stapel aktiver Elemente (19a, 19b, 19c, 19d) und ein Gegengewicht (21a, 21b) umfasst, das entgegengesetzt zum gemeinsamen zentralen Koppler (10) angeordnet ist.

5. Ultraschallwandler nach Anspruch 4, **dadurch gekennzeichnet, dass** die Vorspannvorrichtung (22a, 22b) von einer Hohlstange (23a, 23b), die durch die beiden Wandler und den Koppler geführt ist, sowie einem Paar Halteringen (24a, 24b) zum Komprimieren der Stapel aktiver Elemente und ihrer Gegengewichte gebildet wird.

6. Ultraschallwandler nach einem der Ansprüche 1 bis 5, **dadurch gekennzeichnet, dass** das Übertragungsrohr jedes Moduls aus zwei symmetrischen, aneinandergebauten Rohren (12a, 12b) besteht, zwischen denen der Koppler (25) angeordnet ist.

7. Ultraschallwandler nach Anspruch 1, **dadurch gekennzeichnet, dass** die Abdeckung (11a, 11b) jedes Moduls ein Entkopplungsteil (29a, 29b) umfasst, das das Modul vibratorisch von seinen mechanischen Schnittstellen trennen soll, insbesondere eine Verbindung mit einem Rahmen (16), eine Verbindung zu einem anderen, daneben angeordneten Modul und eine Verbindung zu einem Verschlussdeckel (17).

8. Modulare Anordnung aus mehreren Wandlern nach einem der Ansprüche 1 bis 7, **dadurch gekennzeichnet, dass** die einzelnen Module (8a, 8b, 8c, 8d) von einer gemeinsamen elektronischen Schaltung gespeist werden, die so vorgesehen ist, dass sie die Anzahl der durch die Module geführten Kabel verringert, indem eine durchschnittliche Resonanzfrequenz für die Erregungsfrequenz des Systems verwendet wird.

9. Behandlungsmaschine, umfassend einen Behälter (43), in dem sich eine Anordnung von Wandlern nach Anspruch 8 und eine mit Ultraschall zu behandelnde Oberfläche (42) befindet, **dadurch gekennzeichnet, dass** sich die zu behandelnde Oberfläche (42) in einem Abstand von der Oberfläche des Rohrs (12a, 12b) befindet, die im Wesentlichen gleich einer halben Wellenlänge (45) in dem Medium des Wandlers ist.

10. Behandlungsmaschine nach Anspruch 9, **dadurch gekennzeichnet, dass** die mit Ultraschall zu behandelnde Fläche ein Materialstreifen (42a, 42b) ist, der um mehrere Wandler (8a, 8b, 8c, 8d, 8e) herum geführt ist, um deren Ultraschallaussetzung zu erhöhen.

11. Behandlungsmaschine, die einen Behälter (43) umfasst, in dem eine Anordnung von Wandlern nach Anspruch 8 untergebracht ist, **dadurch gekennzeichnet, dass** der Behälter (43) eine zylindrische Form hat, wobei das Fluid an einem Ende (46) eingespritzt und am anderen Ende (48) ausgetragen wird, um eine Behandlung in kontinuierlichem Fluss zu ermöglichen, und dass die Wandler im Wesentlichen koaxial in dem Behälter angeordnet sind.

## Claims

1. Tubular ultrasonic transducer to propagate acoustic waves in a fluid medium, and comprising
- at least one metallic tube (3, 12a, 12b) for transmitting vibrations to the fluid medium,
- an electromechanical conversion device (2, 9a, 9b) with active elements associated with said at least one metallic tube (3, 12a, 12b) for transmitting vibrations to the fluid medium,
- power supply cables (37, 38, 39, 40) of the conversion device,
- and a pre-stressing device (22a, 22b) of the active elements of said conversion device,
**characterized in that** the conversion device is composed of two electromechanical converters (9a, 9b) arranged axially inside the tube (12a, 12b), on each side of a coupler (10, 25), which is located in the central part of the tube and in contact with the latter, and that each end of the tube is equipped with a cap (11a, 11b), the assembly forming a submersible symmetrical module with radial vibration.

2. Ultrasonic transducer according to claim 1, **characterized in that** the pre-stressing device (22a, 22b) of the active elements of each module comprises a pass-through axial passage to enable routing of the power supply cables (37, 38, 39, 40) of the adjoined modules and of the opposite converter.

3. Ultrasonic transducer according to claim 1 or 2, **characterized in that** the two electromechanical converters (9a, 9b) are supplied by AC voltages, either in phase or in opposite phase, to respectively obtain a first radial vibration mode (4b) of the tube or a second axial vibration mode (4c) of the tube.

4. Ultrasonic transducer according to one of claims 1 to 3, **characterized in that** each electromechanical converter comprises a stack of active elements (19a, 19b, 19c, 19d) and a counterweight (21a, 21b) arranged opposite the common central coupler (10).

5. Ultrasonic transducer according to claim 4, **characterized in that** the pre-stressing device (22a, 22b) is constituted by a hollow rod (23a, 23b) passing through the two converters and the coupler, and a pair of securing rings (24a, 24b) for compressing the stacks of active elements and their counterweights.

6. Ultrasonic transducer according to one of claims 1 to 5, **characterized in that** the transmission tube of each module is composed of two adjoined symmetrical tubes (12a, 12b) with interposition of the coupler (25).

7. Ultrasonic transducer according to claim 1, **characterized in that** the cap (11a, 11b) of each module comprises a decoupling part (29a, 29b) to isolate the module from its mechanical interfaces in vibratory mode, in particular a connection to a frame (16), a connection to another juxtaposed module and a connection to a closing cap (17).

8. Modular assembly of a plurality of transducers according to one of claims 1 to 7, **characterized in that** the different modules (8a, 8b, 8c, 8d) are supplied by a common electronic circuit configured to reduce the number of cables running through the modules, using a mean resonance frequency for the excitation frequency of the system.

9. Treatment machine comprising a tank (43) in which an assembly of transducers according to claim 8 are housed, and a surface to be treated (42) by ultrasounds, **characterized in that** the surface to be treated (42) is located at a distance from the surface of the tube (12a, 12b) substantially equal to a half wavelength (45) in the medium of the transducer.

10. Treatment machine according to claim 9, **characterized in that** the surface to be treated by ultrasounds is a strip of material (42a, 42b), guided around several transducers (8a, 8b, 8c, 8d, 8e) to increase the exposure to the ultrasounds.

11. Treatment machine comprising a tank (43) in which an assembly of transducers according to claim 8 is housed, **characterized in that** the tank (43) is of cylindrical shape, the fluid being inlet at one end (46) and outlet (48) at the other end to enable a continuous-flow treatment, and that the transducers are arranged in substantially coaxial manner in said tank.
